# EUROPEAN PATENT APPLICATION

(11) **EP 4 778 418 A1**
(43) Date of publication of application: **22.07.2026**
(21) Application number: 25221506.6
(22) Date of filing: 08.12.2025
(51) Int. Cl.: A43B 1/00, A43B 3/00, A43B 5/02, A43B 7/1425, A43B 7/1435, A43B 7/1445, A43B 7/145, A43B 7/148, A43B 7/149, A43B 7/32, A43B 13/18, B33Y 80/00

(54) **CUSHIONING ELEMENT FOR A SHOE COMPRISING A SPIRAL GRID STRUCTURE**

(30) Priority: 15.01.2025 DE 102025101301
(71) Applicant: adidas AG, 91074 Herzogenaurach (DE)
(72) Inventor: ZHAO, Meng, 91074 Herzogenaurach (DE); CURET, Raphael, 91074 Herzogenaurach (DE); GORDON, Andrew, 91074 Herzogenaurach (DE); HABIBI PARSA, Shadi, 91074 Herzogenaurach (DE); SMYSLOV, Aleksandr, 91074 Herzogenaurach (DE)
(74) Representative: Bardehle Pagenberg Partnerschaft mbB Patentanwälte Rechtsanwälte

(57) **Abstract**

An aspect of the present invention relates to cushioning element (100) adapted to be arranged at a sole plate of a shoe, preferably a football shoe. The cushioning element comprises a grid structure (110), wherein the grid structure (110) is arranged in a spiral pattern. Further aspects relate to a sole plate adapted to be arranged at a shoe and a shoe comprising the sole plate and the cushioning element.

## Description

### Field of the invention

An aspect relates to a cushioning element adapted to be arranged at a sole plate of a shoe. The sole plate comprises a grid structure, wherein the grid structure is arranged in a spiral pattern. Further aspects are directed to a sole plate adapted to be arranged at a shoe and a shoe comprising a sole element and a cushioning element.

### Technical background

Aiming to maximize the performance of an athlete is at the very heart of the development and evolution of sporting goods. This especially applies to sport shoes, e.g., running shoes and/or football shoes, where the performance of the athlete crucially depends on the performance of the shoe. Therefore, a lot of effort has been made to optimize the performance of sport shoes, particularly running and/or football shoes.

Specifically, the optimization of the performance of sport shoes, particularly football shoes, is mostly directed to the needs of male athletes, focusing on their specific physiology and their specific biomechanics. However, there are several differences between male and female athletes, particularly with respect to specific movements that appear in football, e.g., internal lateral movements and/or twisting movements. These differences comprise anatomic differences, such as the shape of the foot, differences in biomechanics as well as differences with respect to injury patterns. For example, woman are more prone to certain injuries compared to their male counterparts. Specifically, female footballers suffer more often from anterior cruciate ligament injuries.

However, these differences have not been directly addressed so far. In fact, despite the increasing popularity and success of woman's football, the woman football shoes are often unisex and/or scaled-down versions of the corresponding men's football boot. Such unisex and/or scaled-down versions of the corresponding men's football boot do not properly capture the anatomic and biomechanical specifics of woman and admittedly fail to adequately support female athletes.

US 2021 / 0 186 148 A1 relates to an article of footwear comprising an upper and a sole coupled to the upper. The sole comprises one or more elongate shape memory components defining a cavity and forming a midsole.

CN 1 03 859 693 A is directed to a sneaker with a shearing shock absorption device with the annular fan-blade-shaped hollowed layout. The shearing shock absorption device with the annular fan-blade-shaped hollowed layout is arranged at the position, where the foot sole is located, of the shoe sole of the sneaker, a non-hollowed shock absorption material is arranged in the centre of the shearing shock absorption device, the diameter of the non-hollowed shock absorption material is smaller than the diameter of the shearing shock absorption device, the outer side of the circumference of the non-hollowed shock absorption material is connected with the inner side of the outer circumference of the shearing shock absorption device by arranging a plurality of links at an equal interval, the positions between the adjacent links are hollowed, and the fan-blade-shaped rotary layout with a certain inclination angle is formed after the multiple links at the equal interval or at different intervals are arranged in the shearing shock absorption device.

Therefore, there is a need for an improved sports shoe, particularly a football shoe, that is adapted to the specific needs of female footballers, addressing at least some of the above-described disadvantages of the prior art and further improving other aspects.

### Summary of the invention

A first aspect of the present invention is directed to a cushioning element adapted to be arranged at a sole plate of a shoe, e.g., at a sole plate of a football shoe. The cushioning element comprises a grid structure. Specifically, the grid structure is arranged in a spiral pattern.

A cushioning element adapted to be arranged at a sole plate of a shoe, e.g., a sole plate of a football shoe, may comprise that the cushioning element is arranged at an inner side of the sole plate. An inner side of the sole plate may comprise a side of the sole plate adapted to face a foot. Specifically, a cushioning element adapted to be arranged at a sole plate may comprise that the cushioning element is adapted to be inlayed in the sole plate. In other words, the cushioning element may be adapted to be placed at an inner side of the sole plate.

Generally, the cushioning element comprises a grid structure. A grid structure may comprise regions without material, e.g., the grid structure may comprise at least one hole and/or slot. For example, the grid structure of the cushioning element may comprise a mesh. The grid structure may be an integral part of the cushioning element.

The grid structure is arranged in a spiral pattern. For example, the grid structure may be arranged such as to form a spiral pattern. Arranging the grid structure in a spiral pattern may comprise that the grid structure comprises at least one spiral. In other words, the spiral pattern may comprise a pattern that winds around a centre point at an increasing and or decreasing, e.g., continuously increasing and/or continuously decreasing, distance from the point. Specifically, a spiral may comprise a structure emanating from a point and moving further away as it revolves around the point. For example, the grid structure may comprise a plurality of spirals. Generally, the grid structure may comprise a section of a spiral pattern, e.g., a section of a spiral. A section of a spiral pattern, e.g., a section of a spiral, may comprise a portion of the grid structure that follows the spiral pattern, e.g., follows the spiral without comprising the complete spiral. A portion of the grid structure following the spiral without comprising the complete spiral may comprise that the portion of the grid structure does not comprise an origin and/or initial point of the corresponding spiral.

A cushioning element comprising a grid structure, wherein the grid structure is arranged in a spiral pattern facilitates rotational movements that are performed by an athlete wearing a shoe comprising the cushioning element. Specifically, a grid structure arranged in a spiral pattern allows for mitigating excessive torsional resistance during twisting movements. Facilitating rotational movements and/or mitigating excessive torsional resistance during twisting movements minimizes an injury risk, e.g., a risk for anterior cruciate ligament injuries, and optimizes the performance of the athlete.

Moreover, a cushioning element with a grid structure allows for a weight reduction of the cushioning element, as the grid structure may comprise holes and/or notches. By reducing the weight of the cushioning element, the weight of the corresponding shoe, e.g., football shoe, can be reduced. Reducing the weight of the corresponding shoe optimizes the performance and the wearing comfort of the athlete.

For example, at least a part of the grid structure may emanate in the spiral pattern from an origin of the grid structure.

For example, the grid structure may comprise an origin. The origin of the grid structure may be at least partially comprised in the grid structure. Alternatively, the origin may comprise a (hypothetical) point outside of the grid structure, e.g., a (hypothetical) point from which the spiral pattern emanates. Specifically, the spiral pattern may emanate from the origin of the grid structure. For example, a spiral of the spiral pattern may emanate from the origin of the grid structure. In some embodiments, the spirals of the spiral pattern may originate from the origin of the grid structure, e.g., the spirals of the spiral pattern may originate from a common point. For example, the spirals of the spiral pattern may emanate from the origin of the grid structure and move further away from the origin as it revolves around the origin. In other words, the spirals of the spiral pattern may wind around the origin at a continuously increasing or decreasing distance from the origin.

A cushioning element, wherein at least a part of the grid structure emanates in the spiral pattern from an origin of the grid structure enhances the stability of the grid structure. In addition, the origin of the spiral pattern serves as a pivot point during twisting movements and/or internal lateral movements, thereby mitigating excessive torsional resistance, therefore contributing to a reduced joint strain without impairing the performance of the athlete. Moreover, changing the origin of the grid structure, e.g., changing the position of the origin, allows for changing the pivot point of the cushioning element and/or the shoe comprising the cushioning element and thus enables the adaption of the pivot point to the particular needs of an athlete. In particular, the origin of the grid structure may comprise an aperture. For example, the aperture may comprise a circle geometry. In addition, or alternatively, the aperture may comprise an elliptic geometry.

The aperture may comprise a region of the grid structure without material. For example, the aperture may comprise a circle geometry and/or an elliptic geometry. For example, the elliptic geometry may comprise a minor semi-axis and a major semi-axis. In some embodiments, when the aperture comprises an elliptic geometry, the major semi-axis may be essentially parallel to a longitudinal direction of the cushioning element. Being essentially parallel may comprise that the major semi-axis of the elliptic geometry and the longitudinal direction form an angle of at most 20°, preferably at most 15°, more preferably at most 10°, even more preferably at most 5°, most preferably at most 3°. The longitudinal direction of the cushioning element may correspond to a longitudinal direction of a shoe comprising the cushioning element. In addition, or alternatively, the aperture may comprise a polygonal geometry, e.g., the aperture may comprise a triangle geometry.

An origin of the grid structure comprising an aperture contributes to a weight reduction of the cushioning element and thereby to a weight reduction of the shoe comprising the cushioning element. A weight reduction of the shoe, e.g., a football shoe, minimizes the weight of the shoe and optimizes the performance of the athlete.

Specifically, a diameter of the aperture may be at least 0.5 cm. In addition, or alternatively, the diameter of the aperture may be at least 1 cm. In addition, or alternatively, the diameter of the aperture may be at least 1.5 cm. In addition, or alternatively, the diameter of the aperture may be at least 2 cm. In addition, or alternatively, the diameter of the aperture may be at most 5 cm. In addition, or alternatively, the diameter of the aperture may be at most 4 cm. In addition, or alternatively, the diameter of the aperture may be at most 3 cm. In addition, or alternatively, the diameter of the aperture may be at most 4 cm. In addition, or alternatively, the diameter of the aperture may be at most 5 cm. In addition, or alternatively, the diameter of the aperture may be at most 6 cm. In addition, or alternatively, the diameter of the aperture may be at most 7 cm. In some embodiments, the diameter of the aperture may be in the range between 0.6 cm and 1 cm, preferably in the range between 0.7 cm and 0.9 cm.

The diameter of the aperture may be based on the geometry of the aperture. For example, an aperture comprising a circle geometry may be associated with a different diameter than the aperture comprising an elliptic geometry. In particular, a diameter of a circle may comprise a radius and/or a diameter of the circle. In addition, or alternatively, a diameter of an ellipse may be based on a length of the semi-minor axis and/or the semi-major axis. In addition, or alternatively, a diameter of a triangle may be based on a height of the triangle and/or a radius of a circle encompassing the triangle.

A diameter of the aperture of at least 0.5 cm contributes to the weight reduction of the cushioning element and thus to the weight reduction of a shoe comprising the cushioning element. Moreover, an aperture with a diameter of at least 0.5 cm ensures that a circumference of the aperture is sufficiently large such that the aperture can serve as an origin of the grid structure, e.g., such that sufficiently many spirals of the spiral pattern can emanate from the aperture.

A diameter of the aperture of at most 7 cm ensures that the cushioning element is sufficiently stable, e.g., stable such as to resist a (weight) force exerted by an athlete.

In addition, or alternatively, the diameter of the aperture may be based on a length and/or a width and/or a thickness of the cushioning element. In addition, or alternatively, the diameter of the aperture may be based the position of the aperture, e.g., the position of the aperture within and/or with respect to the grid structure. For example, the diameter auf the aperture may be in the range between 5% and 95% of the length of the cushioning element, preferably in the range between 10% and 90% of the length of the cushioning element, more preferably in the range between 15% and 85% of the length of the cushioning element, most preferably in the range between 20% and 80% of the length of the cushioning element. Specifically, when the aperture comprises an elliptic and/or oval geometry, the diameter of the aperture may be based on the width of the cushioning element. In particular, the diameter auf the aperture may be in the range between 5% and 95% of the width of the cushioning element, preferably in the range between 10% and 90% of the width of the cushioning element, more preferably in the range between 15% and 85% of the width of the cushioning element, most preferably in the range between 20% and 80% of the width of the cushioning element.

Adapting the diameter of the aperture to the dimension of the cushioning element, e.g., the length and/or the width of the cushioning element, and/or to the position of the aperture provides tunability and adjustability of the aperture to the specific properties of a cushioning element. Specifically, adapting the diameter of the aperture to the dimension of the cushioning element, e.g., the length and/or the width of the cushioning element, and/or to the position of the aperture allows for tuning and/or adjusting the aperture to different sizes, e.g., shoe sizes, of the cushioning element.

In some embodiments, the origin of the grid structure may be arranged in a region of the cushioning element adapted to receive a medial portion of a foot. For example, the origin of the grid structure may be arranged in a region of the cushioning element adapted to receive a medial portion of a forefoot. In addition, or alternatively, the origin of the grid structure may be arranged in a region of the cushioning element adapted to receive a medial portion of a midfoot.

In addition, or alternatively, the origin of the grid structure may be arranged in a region of the cushioning element adapted to receive a central portion of a foot. For example, the origin of the grid structure may be arranged in a region of the cushioning element adapted to receive a central forefoot portion. In addition, or alternatively, the origin of the grid structure may be arranged in a region of the cushioning element adapted to receive a central midfoot portion.

Arranging the origin of the grid structure in a region of the cushioning element adapted to receive a medial and/or central portion of a foot may refer to a region of the cushioning element that receives a medial and/or central portion of a foot when arranged in a corresponding shoe.

The arrangement of the origin of the grid structure in a region of the cushioning element adapted to receive a medial and/or central portion of a foot contributes to an improved load distribution and a reduced joint strain. In particular, a grid structure comprising a spiral pattern arranged in a region of the cushioning element adapted to receive a medial and/or central portion of a forefoot facilitates rotational movements as the pivot point of the athlete is typically located in the medial and/or central forefoot portion, e.g., the athlete rests his/her weight on the forefoot portion during rotational movements.

Generally, the grid structure may comprise a plurality of grid elements. For example, the plurality of grid elements may be arranged such as to at least partially form the spiral pattern of the grid structure.

Specifically, the grid elements of the grid structure may essentially form the grid structure. For example, the grid structure may comprise a first grid element and a second grid element. At least a portion of the first grid element may be separated from the second grid element, e.g., the at least portion of the first grid element may be distant to the second grid element. In particular, the first grid element and the second grid element may be separated such as to form a hole and/or a notch. Generally, the grid elements may comprise a shape of a line and/or path. For example, the first grid element may comprise the shape of a first line and/or path and the second grid element may comprise the shape of a second line and/or path. In some embodiments, the grid structure may comprise at least three grid elements, preferably at least five grid elements, more preferably at least seven grid elements, even more preferably at least nine grid elements, most preferably at least 12 grid elements.

The plurality of grid elements may be arranged such as to at least partially form the spiral pattern of the grid structure. For example, at least one grid element of the plurality of grid elements may comprise a spiral, e.g., the at least one grid element may follow a spiral geometry. A grid element following a spiral geometry may comprise that the grid element emanates from a point and moves further away as it revolves around the point. In other words, the grid element may wind around a (fixed) point at a e.g., continuously, increasing or decreasing distance from the point.

A grid structure comprising a plurality of grid elements that is arranged such as to at least partially form the spiral pattern of the grid structure allows for a formation of the grid structure that is arranged in a spiral pattern. Therefore, a grid structure comprising a plurality of grid elements contributes to the mitigation of torsional resistance during twisting movements and facilitates rotational movements

Specifically, at least one of the grid elements of the plurality of grid elements may emanate from the origin of the grid structure.

For example, the plurality of grid elements may emanate from the aperture of the origin of the grid structure. In particular, a start point of a grid element of the plurality of grid elements may be located in a vicinity of the origin and/or the aperture. Specifically, the start points of grid elements of the plurality of grid elements may be arranged along a boundary of the aperture. For example, the start points of grid elements of the plurality of grid elements may be arranged along a boundary of the aperture such that the start points are equally distributed along the boundary of the aperture, e.g., a distance between the start points of the grid elements may be equal.

In some embodiments, a first grid element of the plurality of grid elements may intersect at least one second grid element of the plurality of grid elements.

For example, first grid element may be arranged such as to intersect at least a portion of the second grid element. Specifically, the first grid element may emanate from the origin of the grid structure such as to intersect the at least portion of the second grid element. Generally, the first grid element may intersect the second grid element and may continue to emanate after the intersection, e.g., emanating in a spiral pattern.

In some embodiments, the plurality of grid elements may comprise two groups of grid elements. For example, a first group of grid elements may be arranged in a first spiral pattern and a second group of grid elements may be arranged in a second spiral pattern. For example, the first spiral pattern may comprise a spiral pattern associated with a first orientation. Specifically, the first orientation may comprise a clockwise orientation, e.g., clockwise with respect to the origin of the spiral pattern. In particular, the grid elements of the first group may emanate from the origin of the spiral pattern according to the first orientation. For example, the grid elements of the first group may emanate such from the origin of the spiral pattern as to emanate in a clockwise orientation. In other words, a grid element of the first group of grid elements may wind in a clockwise direction around the origin of the spiral pattern at a (continuously) increasing or decreasing distance from the origin of the spiral pattern.

In addition, or alternatively, the second spiral pattern may comprise a spiral pattern associated with a second orientation. Specifically, the second orientation may comprise a counterclockwise orientation, e.g., counterclockwise with respect to the origin of the spiral pattern. In particular, the grid elements of the second group may emanate from the origin of the spiral pattern according to the second orientation. For example, the grid elements of the second group may emanate such from the origin of the spiral pattern as to emanate in a counterclockwise orientation. In other words, a grid element of the second group of grid elements may wind in a counterclockwise direction around the origin of the spiral pattern at a (continuously) increasing or decreasing distance from the origin of the spiral pattern.

In some embodiments, the grid elements of the first group may be arranged such as to not intersect grid elements of the first group. In addition, or alternatively, the grid elements of the second group may be arranged such as to not intersect grid elements of the second group. In other words, grid elements emanating from the origin in the same orientation may not intersect each other. A grid element of the first group may intersect at least one grid element of the second group. In addition, or alternatively, a grid element of the second group may intersect at least one grid element of the first group. In other words, grid elements that emanate from the origin of the grid structure in different orientations may intersect each other.

Specifically, the first grid element may intersect the at least one second grid element essentially perpendicular. Intersecting the at least one second grid element essentially perpendicular may comprise that the first grid element intersects the at least one second grid element with an angle in the range between 60° and 120°, preferably in the range between 70° and 110°, more preferably in the range between 80° and 100°, most preferably in the range between 85° and 95°. For example, the first grid element may be a grid element of the first group of grid elements and the second grid element may be a grid element of the second group of grid elements.

Generally, a thickness of the plurality of grid elements may be at least 0.1 mm. In addition, or alternatively, the thickness of the plurality of grid elements may be at least 0.5 mm. In addition, or alternatively, the thickness of the plurality of grid elements may be at least 0.9 mm. In addition, or alternatively, the thickness of the plurality of grid elements may be at least 1.3 mm. In addition, or alternatively, the thickness of the plurality of grid elements may be at least 1.7 mm. In addition, or alternatively, the thickness of the plurality of grid elements may be at most 2 cm. In addition, or alternatively, the thickness of the plurality of grid elements may be at most 1.5 cm. In addition, or alternatively, the thickness of the plurality of grid elements may be at most 1.0 cm. In addition, or alternatively, the thickness of the plurality of grid elements may be at most 0.5 cm. In addition, or alternatively, the thickness of the plurality of grid elements may be at most 2.5 mm.

The size of the plurality of grid elements may comprise a diameter of a grid element with respect to a cross-section. Specifically, the cross-section may comprise a cross-section that is essentially perpendicular to the direction of emanation of the grid element, e.g., the direction of the spiral. Generally, the (minimal) thickness of a grid element may be based on a size, e.g., a length and/or a width, and/or a geometry of the cushioning element. Specifically, the (minimal) thickness of a grid element may be based on a size, e.g., a length and/or a width, and/or a geometry of the grid structure of the cushioning element. For example, the thickness of the grid element may be larger for a larger size of the cushioning element and/or a larger size of the grid structure.

In addition, or alternatively, the thickness of the plurality of grid elements may be based on a number of grid elements comprised in the plurality of grid elements. For example, the thickness of the grid elements may be such that the grid structure can comprise at least three grid elements, preferably at least five grid elements, even more preferably at least seven grid elements, even more preferably at least nine grid elements, most preferably at least 12 grid elements. In other words, the thickness of the grid elements may decrease with an increasing number of grid elements in the plurality of grid elements.

Grid elements with a thickness of at least 0.1 mm ensure that the cushioning element, particularly the grid structure, is sufficiently stable, e.g., stable such as to resist a (weight) force exerted by an athlete. In addition, a thickness of the grid element of at most 0.5 cm allows for reducing the weight of the cushioning element and thereby of a shoe comprising the cushioning element. Reducing the weight of a shoe optimizes the performance of an athlete.

In general, the cushioning element may further comprise a continuous portion. In particular, at least a part of the continuous portion may be located at a boundary of the cushioning element.

The continuous portion of the cushioning element may comprise a portion of continuous material. For example, the continuous portion may not comprise a hole and/or notches. Specifically, the continuous portion may not comprise the grid structure. In addition, or alternatively, the continuous portion may be adapted such as to form essentially a smooth surface. In some embodiments, the continuous portion may be a monobloc, e.g., the continuous portion may be formed as one piece. In addition, or alternatively, the continuous portion may comprise a plurality of continuous portions, e.g., the plurality of continuous portions may be separate portions. Two continuous portions may be separate when they are not connected by a continuous portion. For example, the two continuous portions may be separated by a portion of the grid structure.

The boundary of the cushioning element may comprise an outer boundary of the cushioning element, e.g., a boundary that encompasses the cushioning element from the outside. At least a part of the continuous portion may be located at the boundary of the cushioning element. For example, a boundary of the part of the continuous portion may be located in a vicinity of the boundary of the cushioning element. In particular, the boundary of the part of the continuous portion may form a part of the boundary of the cushioning element.

In some embodiments, a first part of the continuous portion may be located at the boundary of the cushioning element. In addition, a second part of the continuous portion may be located at a distance to the boundary of the cushioning element. For example, the first part of the continuous portion may comprise a front end of the continuous portion. In addition, or alternatively, the first part of the continuous portion may comprise a rear end of the continuous portion. In other words, the front end and/or the rear end of the continuous portion may be located at a boundary of the cushioning element. For example, a part of the front end and/or the rear end of the continuous portion may form a part of the boundary of the cushioning element. The second part of the continuous portion may comprise a lateral and/or medial part of the continuous portion. Specifically, the second part of the continuous portion may be distant to the boundary of the cushioning element such that between the second part of the continuous portion and the outer surface a portion of the grid structure extends. In other words, between a boundary of the second part of the continuous portion and the boundary of the cushioning element a portion of the grid structure may extend, e.g., the portion of the grid structure may connect the second part of the continuous portion and the boundary of the cushioning element.

Locating at least a part of the continuous portion at the boundary of the cushioning element contributes to the stability of the grid structure and thereby to the stability of the cushioning element. Specifically, locating the part of the continuous portion at the boundary of the cushioning element allows for joining grid elements, e.g., end points of the grid elements, with the continuous portion.

For example, the at least part of the continuous portion may essentially follow the boundary of the cushioning element. In particular, the continuous portion may essentially follow the boundary of the cushioning element such as to essentially encompass the complete boundary of the cushioning element.

The at least part of the continuous portion that is arranged at the boundary of the cushioning element may essentially follow the boundary of the cushioning element. Essentially following the boundary of the cushioning element may comprise that a curvature and/or a shape of the boundary of the at least part of the continuous portion follows a curvature and/or a shape of the boundary of the cushioning element. Specifically, the continuous portion may essentially follow the boundary of the cushioning element such as to essentially encompass the complete boundary of the cushioning element. For example, the continuous portion may be arranged at the boundary of the cushioning element along the complete boundary of the cushioning element. In particular, the continuous portion may be arranged such at the boundary of the cushioning element as to form the boundary of the cushioning element.

Specifically, a diameter of the continuous portion of the cushioning element may be at least 0.1 cm. In addition, or alternatively, the diameter of the continuous portion of the cushioning element may be at least 0.5 cm. In addition, or alternatively, the diameter of the continuous portion of the cushioning element may be at least 0.9 cm. In addition, or alternatively, the diameter of the continuous portion of the cushioning element may be at least 1.4 cm. In addition, or alternatively, the diameter of the continuous portion of the cushioning element may be at least 2 cm. In addition, or alternatively, the diameter of the continuous portion of the cushioning element may be at most 6 cm. In addition, or alternatively, the diameter of the continuous portion of the cushioning element may be at most 5 cm. In addition, or alternatively, the diameter of the continuous portion of the cushioning element may be at most 4 cm. In addition, or alternatively, the diameter of the continuous portion of the cushioning element may be at most 3 cm. In addition, or alternatively, the diameter of the continuous portion of the cushioning element may be at most 2 cm.

In general, the diameter of the continuous portion may comprise an extension of the continuous portion with respect to a direction pointing from a boundary of the cushioning element towards an inner portion of the cushioning element. In some embodiments, the diameter of the continuous portion may vary along the continuous portion. For example, a first part of the continuous portion may comprise a first diameter and a second part of the continuous portion may comprise a second diameter. In addition, or alternatively, the diameter of the continuous portion may vary continuously along the continuous portion. In some embodiments, the diameter of the continuous portion may be essentially constant along the continuous portion. An essentially constant diameter of the continuous portion may comprise that the diameter of the continuous portion varies by at most 30%, preferably at most 20%, more preferably at most 10%, even more preferably at most 5%, most preferably at most 2%.

In addition, or alternatively, the diameter of the continuous portion may be based on a size, e.g., a length and/or a width, and/or a geometry of the cushioning element. In addition, or alternatively, the diameter of the continuous portion may be based on a position of the origin of the grid structure, particularly a position and/or a size of the aperture of the cushioning element.

Generally, a shape of the cushioning element may be based on a shape and/or size of the sole plate. In addition, or alternatively, a size of the cushioning element may be based on the shape and/or size of the sole plate.

For example, the shape of the cushioning element may be such that the cushioning element can be arranged at the sole plate. For example, the cushioning element may essentially comprise the shape and/or size of a portion of the sole plate. Specifically, the shape of the cushioning element may essentially comprise the shape and/or size of a forefoot and/or midfoot portion of the sole plate. Comprising the same shape as the sole plate may comprise that at least a portion of a boundary of the cushioning element follows the boundary of the sole plate. In particular, curvature of the at least a portion of the boundary of the cushioning element may follow a curvature of the boundary of the sole plate. In addition, or alternatively, the size of the cushioning element may be such that the cushioning element can be arranged at the sole plate.

A size and/or shape of the cushioning element based on the size and/or shape of the sole plate allows for arranging the cushioning element at the sole plate and enables the sole plate to receive the cushioning element. In particular, a size and/or a shape of the cushioning element that essentially corresponds to a size and/or shape of the sole plate ensures that the cushioning element provides its advantageous effects at a maximal region and also ensures that the cushioning element does not get out of place, e.g., the cushioning element cannot shift during movements the shoe comprising the sole plate.

In general, at least a part of the cushioning element may be 3D printed. For example, the at least part of the cushioning element that is 3D printed may comprise the grid structure. In addition, or alternatively, the at least part of the cushioning element that is 3D printed may comprise the continuous portion.

For example, the grid structure of the cushioning element may be 3D printed. 3D printing the grid structure of the cushioning element may comprise 3D printing the grid elements of the grid structure. In particular, the grid structure, e.g., the grid elements of the grid structure, may be 3D printed such as to follow a spiral pattern. In some embodiments, the grid structure and the continuous portion of the cushioning element may be 3D printed. Specifically, the grid structure and the continuous portion of the cushioning element may be 3D printed such as to form one piece.

3D printing the grid structure and/or the continuous portion of the cushioning element simplifies, automatize and facilitates the production of the cushioning element, thereby minimizing the production costs and optimizing the production process. In addition, 3D printing the grid structure and/or the continuous portion of the cushioning element ensures a consistent quality of the cushioning element, e.g., the grid structure of the cushioning element can be consistently reproduced.

Specifically, the at least a part of the cushioning element that is 3D printed may be 3D printed by stereolithography. For example, the at least a part of the cushioning element that is 3D printed may be 3D printed based on a photochemical process.

For example, the 3D printing process may be based on photochemical techniques. In addition, or alternatively, the 3D printing process may be based on powder 3D printing techniques. In addition, or alternatively, the 3D printing process may be based on filament 3D printing techniques. For example, the powder- and/or filament 3D printing techniques may be based on elastic, e.g., non-thermal, materials.

Using photochemical techniques allows for providing homogeneous properties across different printing directions. Providing homogeneous properties across different printing directions minimizes (unwanted) spatial variations of the properties of the cushioning element, thereby optimizing the quality of the cushioning element.

Generally, the cushioning element may comprise polyurethane. For example, the grid structure of the cushioning element may comprise polyurethane.

For example, the grid elements of the grid structure may comprise polyurethane. In addition, or alternatively, the continuous portion of the cushioning element may comprise polyurethane. In addition, or alternatively, the cushioning element, e.g., the grid structure and/or the continuous portion, may comprise thermoplastic elastomers. For example, thermoplastic elastomers may comprise thermoplastic polyamides (TPE-A) and/or thermoplastic copolyesters (TPE-E) and/or thermoplastic polyurethane (TPU).

In general, the grid structure may cover at least 10% of the cushioning element. In addition, or alternatively, the grid structure may cover at least 30% of the cushioning element. In addition, or alternatively, the grid structure may cover at least 50% of the cushioning element. In addition, or alternatively, the grid structure may cover at least 70% of the cushioning element. In addition, or alternatively, the grid structure may cover at least 90% of the cushioning element.

A grid structure covering the cushioning element may comprise that the grid structure forms the cushioning element, e.g., covering at least 10% of the cushioning element may comprise that at least 10% of the cushioning element is formed by the grid structure. Generally, the amount of the cushioning element that is covered by the grid structure may be based on a size of the continuous portion. For example, the size, e.g., the diameter, of the continuous portion may decrease when the area covered by the grid structure increases. In some embodiments, the size of the continuous portion may be complementary to the area covered by the grid structure. For example, the area of the grid structure and the size, e.g., the area, of the continuous portion may be such that their union essentially corresponds to the area of the cushioning element. For example, when the grid structure of the cushioning element covers X% of the cushioning element, the size, e.g., the diameter, of the continuous portion may be configured such that the continuous portion covers an area of 100% - X% of the cushioning element.

A grid structure covering at least 10% of the cushioning element ensures that the spiral pattern of the grid structure covers at least 10% of the cushioning element. Covering at least 10% of the cushioning element with the spiral pattern facilitates rotational movements of the athlete as it guarantees at a sufficiently large area of a lower side of a foot of the athlete contacts and/or faces the spiral pattern.

In addition, or alternatively, the grid structure may cover at most 99% of the cushioning element. In addition, or alternatively, the grid structure may cover at most 95% of the cushioning element. In addition, or alternatively, the grid structure may cover at most 90% of the cushioning element. In addition, or alternatively, the grid structure may cover at most 85% of the cushioning element. In addition, or alternatively, the grid structure may cover at most 80% of the cushioning element.

Covering at most 99% of the cushioning element with the grid structure ensures that a sufficiently large part, e.g., at least 1% of the cushioning element, is covered by the continuous portion. Covering a sufficiently large area of the cushioning element, e.g., at least 1%, with the continuous portion contributes to the stability of the cushioning element.

Generally, the cushioning element may further comprise at least one sidewall. For example, the at least one sidewall may be arranged at a boundary of the cushioning element. In particular, the at least one sidewall of the cushioning element may extend from the continuous portion of the cushioning element.

The sidewall of the cushioning element may comprise an increase in a vertical extension of the cushioning element. Specifically, the cushioning element may comprise an increase in the vertical extension of the cushioning element at a boundary region of the cushioning element. For example, the sidewall may emerge from the continuous portion of the cushioning element. Specifically, the sidewall may emerge from the continuous portion of the cushioning element such that the sidewall bends the continuous portion upwards. In other words, the sidewall may comprise an upwardly bended part of the continuous portion. Specifically, the sidewall may be such that a thickness of the continuous portion does essentially not increase at the location of the sidewall. In addition, or alternatively, the sidewall may comprise a portion of the cushioning element comprising additional material, e.g., a thickness of the sidewall may be larger than a thickness of the continuous portion.

A sidewall of the cushioning element contributes to the stability of the cushioning element, particularly to the stability of the continuous portion. In addition, the sidewall enables and facilitates the arrangement of the cushioning element at the sole plate. In particular, the sidewall may be adapted such that a shape and/or geometry of the sidewall follows a shape and/or geometry of a portion of the sole element, e.g., a portion of the sole element adapted to receive the cushioning element.

A second aspect is directed to a sole plate adapted to be arranged at a shoe, e.g., a football shoe. The sole plate comprises a first cavity adapted to receive a first cushioning element. The first cushioning element comprises an above-described cushioning element.

The first cavity of the sole plate may comprise a region that is adapted to receive the first cushioning element. Specifically, a size and/or shape of the cavity may be such as to enable the cavity to receive the cushioning element. Generally, a portion of the sole plate may be formed and/or shaped such that the portion of the sole plate essentially forms the first cavity. For example, the first cavity of the sole plate may be essentially formed by a surface of the sole plate. In other words, the first cavity may be an integral part of the sole plate. For example, a size and/or shape of the first cavity may be such that the first cavity and the cushioning element form a positive locking when the first cavity receives the cushioning element. Generally, receiving the cushioning element by the first cavity may comprise arranging the cushioning element at a sole plate.

For example, the first cavity may be arranged in a region of the sole plate adapted to receive a forefoot. In addition, or alternatively, the first cavity may be arranged in a region of the sole plate adapted to receive a midfoot. In particular, the cavity may extend from the region adapted to receive the forefoot to the region adapted to receive the midfoot.

For example, a portion of the sole element may be formed and/or shaped such that the first cavity is arranged in a region adapted to receive a forefoot. In addition, or alternatively, a portion of the sole element may be formed and/or shaped such that the first cavity is arranged in a region adapted to receive a midfoot. In some embodiments, the first cavity may extend from the region adapted to receive the forefoot to the region adapted to receive a midfoot. For example, the first cavity may extend such to the region adapted to receive a midfoot as to essentially cover the complete midfoot region. Covering essentially the complete midfoot region may comprise that the first cavity extends to a rear end of the midfoot portion, e.g., to a point where the region adapted to receive the midfoot transitions into a region adapted to receive a rearfoot and/or a heel.

Generally, a diameter of the cavity may be based on a diameter of the sole plate. For example, the diameter of the cavity may essentially correspond to the diameter of the sole plate.

The diameter of the sole plate may comprise a diameter of the sole plate with respect to a direction pointing from a medial side of the sole plate to a lateral side of the sole plate. Generally, the diameter of the sole plate may vary along a length of the sole plate. For example, the diameter of the sole plate continuously may vary along the sole plate. In particular, the diameter of the sole plate in the region adapted to receive the midfoot may be smaller than a diameter of the sole plate in a region adapted to receive a forefoot and/or a rearfoot. Similarly, the diameter of the first cavity may vary along a length of the first cavity. For example, the diameter of the first cavity may vary such along the length of the sole plate as to correspond to the diameter variation of the sole plate. Specifically, the diameter of the first cavity may essentially correspond to the diameter of the sole plate. Essentially corresponding to the diameter of the sole plate may comprise that the diameter of the cavity deviates by at most 20%, preferably at most 15%, more preferably at most 10%, even more preferably at most 5%, most preferably at most 2% from the diameter of the sole plate.

Specifically, the cavity may be arranged on a side of the sole plate adapted to face a foot. In other words, the cavity may not be arranged on a side of the sole plate adapted to face a ground.

In general, at least a part of the sole plate may be manufactured by injection moulding. For example, the complete sole plate may be manufactured by injection moulding. Generally, the sole plate may comprise polyamide. For example, the sole plate may comprise polyamide 11.

In general, the sole plate may comprise a second grid structure. For example, the second grid structure may comprise a spiral pattern.

The second grid structure may comprise a spiral pattern, e.g., the second grid structure may comprise a plurality of grid elements following a spiral pattern. In addition, or alternatively, the second grid structure may comprise a rectangular and/or quadratic and/or rhombic pattern. For example, the grid elements of the second grid structure may be arranged in a rectangular and/or quadratic pattern. Specifically, the grid elements of the second grid structure may be arranged such as to form rectangular and/or quadratic and/or rhombic holes and/or notches. Specifically, the plurality of grid elements of the second grid structure may be arranged such that the size of the rectangular and/or quadratic and/or rhombic holes and/or notches varies with the position of the respective hole and/or notch. For example, a first hole and/or notch at a first position may comprise a first size and the second hole and/or notch at a second position may comprise a second size. For example, a hole and/or a notch arranged at a rearfoot portion of the sole plate may be larger than a hole and/or a notch arranged at a midfoot portion. In addition, or alternatively, at least a part of the grid elements of the plurality of grid elements of the second grid structure may comprise essentially the same size and/or shape.

The second grid structure of the sole plate provides further cushioning of the sole plate and thus of the shoe, thereby optimizing the wearing comfort and the performance of the athlete. In addition, the second grid structure of the sole plate further reduces the weight of the sole plate, thereby reducing the weight of the shoe comprising the sole plate.

Specifically, the second grid structure may be arranged at a heel area of the sole plate. In addition, or alternatively, the second grid structure may be arranged at a portion of the sole plate adapted to receive a midfoot. Specifically, the second grid structure may extend from the heel area of the sole plate towards the midfoot portion of the sole plate. In addition, or alternatively, the at least a part of the second grid structure may be arranged at a portion of the sole plate adapted to receive a forefoot. For example, an area of the second grid structure may cover at least 10%, preferably at least 30%, more preferably at least 50%, even more preferably at least 70%, most preferably at least 90% of the heel area of the sole plate.

In some embodiments, at least a portion of the second grid structure may be integrally formed with the sole plate. For example, the at least portion of the second grid structure may be integrally formed with the sole plate by injection moulding. In addition, or alternatively, at least a portion of the second grid structure may be attached to the sole plate. For example, the at least portion of the grid structure may be attached to the sole plate via gluing. Generally, the second grid structure may cover a connected area of the sole plate, e.g., the second grid structure may not decompose into at least two unconnected second grid structures. The second grid structure may split in a region of the sole plate adapted to receive a midfoot.

Generally, the sole plate may comprise at least one stud. The at least one stud may be arranged on a side of the sole plate adapted to face a ground. In other words, the at least one stud may be arranged on a side of the sole plate opposite to the side of the sole plate comprising the cavity. For example, the at least one stud may be arranged in a region adapted to receive a forefoot. In addition, or alternatively, the at least one stud may be arranged in a region adapted to receive a midfoot. In addition, or alternatively, the at least one stud may be arranged in a region adapted to receive a rearfoot. For example, the sole element may comprise at least two, preferably a least three, most preferably at least four studs. In some embodiments, at least two studs, preferably at least three studs, most preferably at least four studs may be arranged at portion of the sole plate adapted to receive a rearfoot.

The at least one stud may be arranged at a medial side of the sole plate. Specifically, the at least one stud may be arranged at a medial boundary of the sole plate. In addition, or alternatively, the at least one stud may be arranged at the lateral side of the sole plate. In addition, or alternatively, the at least one stud may be arranged at a central portion of the sole plate, e.g., a portion where the medial side of the sole plate transitions into the lateral side of the sole plate. For example, the at least one stud may be arranged at a forefoot central portion of the sole element. Specifically, the at least one stud may be arranged at a lateral boundary of the sole plate. For example, the number of studs at the lateral side may be based on the number of studs at the medial side of the sole plate. For example, the number of studs at the lateral side may be equal to the number of studs at the medial side of the sole plate. Generally, the studs may be an integral part of the sole plate. For example, the studs and the sole plate may be formed as one piece. The studs may be formed by moulding, e.g., injection moulding.

Generally, the above-described sole plate may comprise the above-described first cushioning element.

A third aspect relates to a shoe, e.g., a football shoe. The shoe comprises the above-described sole element. In addition, the shoe comprises the above-described cushioning element. Specifically, the cushioning element is arranged in a cavity of the sole element.

Generally, the shoe may further comprise an inner sole. For example, at least a part of the inner sole may be arranged on the cushioning element.

### Short description of the figures

In the following, exemplary embodiments of the invention are described with reference to the figures. The figures show:
- **Fig.** 1:: Top view of an illustrative exemplary embodiment of the cushioning element according to the present invention, wherein the cushioning element is arranged at a sole plate;
- Fig. 2A:: Lateral top side view of a sole plate according to the present invention, wherein a cushioning element according to the present invention is arranged at the sole plate;
- Fig. 2B:: Top side view of a sole plate according to the present invention, wherein a cushioning element according to the present invention is arranged at the sole plate;
- Fig. 2C:: Lateral top side view of a sole plate according to the present invention, wherein a cushioning element according to the present invention is not (yet) arranged at the sole plate;
- Fig. 2D:: Bottom side view of a sole plate according to the present invention;
- Fig. 3:: Exemplary embodiment of a cushioning plate according to the present invention.

### Detailed description of preferred embodiments

In the following, only some possible embodiments of the invention are described in detail. It is to be understood that these exemplary embodiments can be modified in a number of ways and combined with each other whenever compatible and that certain features may be omitted in so far as they appear dispensable.

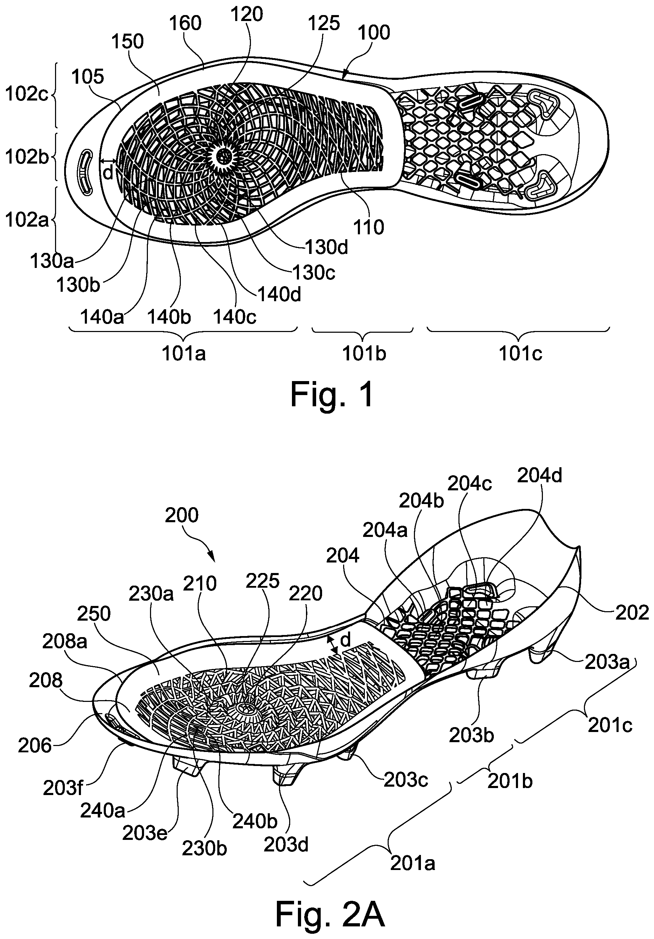

Figure 1 shows an exemplary embodiment of a cushioning element 100 arranged at a sole plate. The cushioning element 100 comprises a grid structure 110. Specifically, the grid structure 110 is arranged in a spiral pattern. The cushioning element 100 further comprises an origin 120. At least a part of the grid structure 110 emanates from the origin 120 in the spiral pattern. The origin 120 comprises an aperture 125. The aperture 125 comprises a circle geometry, e.g., the aperture 125 of the origin 120 has the form of a circle. In some embodiments, the aperture 125 of the origin 120 may comprise a different geometry, e.g., an elliptic and/or polygonal geometry. The origin 120, and particularly the aperture 125 of the origin 120, is located in a central region 102b of a forefoot region 101a. For example, the origin 120 and/or the aperture 125 of the origin 120 may be arranged essentially symmetrical with respect to the cushioning element 100.

The grid structure 110 comprises a plurality of grid elements. For example, the grid structure 110 comprises the grid elements 130a, 130b, 130c, 130d, 140a, 140b, 140c, 140d (not all of them are labelled). The grid elements 130a, 130b, 130c, 130d, 140a, 140b, 140c, 140d are arranged such as to form the spiral pattern of the grid structure 110. In particular, the grid elements 130a, 130b, 130c, 130d, 140a, 140b, 140c, 140d essentially follow the shape of a spiral. At least a part of the grid elements 130a, 130b, 130c, 130d, 140a, 140b, 140c, 140d of the grid structure 110 emanate from the origin 120, particularly from the aperture 125 of the origin 120. In particular, the grid elements 130a, 130b, 130c, 130d, 140a, 140b, 140c, 140d emanate from the origin 120 of the grid structure 110. The grid elements 130a, 130b, 130c, 130d, 140a, 140b, 140c, 140d essentially following the shape of the spiral emanate from the origin 120 and move further away from the origin 120 as they revolve the origin 120. In other words, a grid element 130a, 130b, 130c, 130d, 140a, 140b, 140c, 140d corresponds to a curve that winds around the origin 120 at a (continuously) increasing and/or decreasing distance from the origin 120. The grid structure 100 comprises a first group 130a, 130b, 130c, 130d of grid elements 130a, 130b, 130c, 130d, 140a, 140b, 140c, 140d and a second group 140a, 140b, 140c, 140d of grid elements 130a, 130b, 130c, 130d, 140a, 140b, 140c, 140d. Specifically, the first group 130a, 130b, 130c, 130d of grid elements 130a, 130b, 130c, 130d, 140a, 140b, 140c, 140d are arranged such as to comprise a clockwise orientation. For example, the grid elements 130a, 130b, 130c, 130d of the first group of grid elements 130a, 130b, 130c, 130d, 140a, 140b, 140c, 140d wind around the origin 110 in a clockwise direction. In addition, the second group 140a, 140b, 140c, 140d of grid elements 130a, 130b, 130c, 130d, 140a, 140b, 140c, 140d are arranged such as to comprise a counterclockwise orientation. For example, the grid elements 140a, 140b, 140c, 140d wind around the origin 110 in a counterclockwise direction.

Grid elements 130a, 130b, 130c, 130d, 140a, 140b, 140c, 140d of the grid structure 110 intersect each other. For example, the grid element 130a intersects the grid element 140a. In addition, the grid element 130a further intersects the grid elements 140b and 140c. Similarly, the grid element 130b intersects the grid elements 140a, 140b, 140c and the grid element 130c intersects the grid elements 140a, 140b, 140c, 140d. In other words, grid elements 130a, 130b, 130c, 130d of the first group intersect grid elements 140a, 140b, 140c, 140d of the second group. In addition, grid elements 130a, 130b, 130c, 130d of the first group do not intersect grid elements of the first group 130a, 130b, 130c, 130d and grid elements 140a, 140b, 140c, 140d of the second group do not intersect grid elements of the second group 140a, 140b, 140c, 140d.

Specifically, a first grid element of the plurality of grid elements 130a, 130b, 130c, 130d, 140a, 140b, 140c, 140d intersects a second grid element of the plurality of grid elements 130a, 130b, 130c, 130d, 140a, 140b, 140c, 140d essentially in a right angle, e.g., perpendicularly. For example, the grid element 130b intersects the grid element 140b essentially in a right angle. Intersecting the grid element 140b essentially in a right angle comprises to intersect the grid element 140b in an angle in the range between 80° and 100°. Similarly, the grid element 130a intersects the grid element 140a essentially in a right angle. However, the plurality of grid elements 130a, 130b, 130c, 140a, 140b, 140c may comprise intersecting grid element, wherein the grid elements do not intersect essentially perpendicularly. For example, the grid element 130a may not intersect the grid element 140b in a right angle, e.g., the angle may be smaller than 90°.

The grid elements 130a, 130b, 130c, 130d, 140a, 140b, 140c, 140d of the grid structure 110 comprise a thickness. The thickness of the grid elements 130a, 130b, 130c, 130d, 140a, 140b, 140c, 140d comprises a thickness with respect to a plane orthogonal to a direction in which the grid elements 130a, 130b, 130c, 130d, 140a, 140b, 140c, 140d propagate, e.g., a direction following the spiral form of the grid elements 130a, 130b, 130c, 130d, 140a, 140b, 140c, 140d.

In addition, the cushioning element 100 comprises a continuous portion 150. The continuous portion 150 of the cushioning element 100 is located at a boundary 105 of the cushioning element 100. Specifically, the continuous portion 150 of the cushioning element 100 essentially encompasses the boundary 105 of the cushioning element 100. For example, an inner boundary of the continuous portion 150 of the cushioning element 100, e.g., a boundary of the continuous portion 150 adjacent to the grid structure 110, essentially follows the boundary 105 of the cushioning element 100. The grid structure 110 emanates from the origin 120 and propagates towards the (inner boundary of) continuous portion. For example, the grid structure 110 terminates at the continuous portion 150. Specifically, grid elements 130a, 130b, 130c, 130d, 140a, 140b, 140c, 140d emanate from the origin 120 and/or the aperture 125 and terminate and/or end at the continuous portion 150 of the cushioning element 100, particularly at the inner boundary of the continuous portion 150.

The continuous portion 150 comprises a diameter d. The diameter d of the continuous portion 150 comprises a diameter with respect to a direction pointing from the boundary 105 of the cushioning element towards an interior of the cushioning element, e.g., the grid structure and/or the origin 120 of the grid structure 110. In particular, the diameter d of the continuous portion 150 comprises a distance between the boundary 105 of the cushioning element 100 and the inner boundary of the continuous portion 150, e.g., the part of the continuous portion 150 adjacent to the grid structure 110 of the cushioning element 100. For example, the diameter d of the continuous portion may be in the range between 0.1 cm and 6 cm. Specifically, the diameter of the continuous portion 150 is based on the side of the grid structure 110.

In addition, the cushioning element 100 comprises a sidewall 160. The sidewall 160 is located at the boundary 105 of the cushioning element. Specifically, the sidewall 160 emerges from the continuous portion 150 of the cushioning element 100. For example, the sidewall 160 may comprise a (boundary) portion of the continuous portion 150 that bends upwards, e.g., out of the plane shown in Fig. 1. The sidewall 160 is arranged at a lateral side 102c of the cushioning element and at a medial side 102a of the cushioning element 100. In other words, the sidewall 160 is not arranged at a front portion of the cushioning element. In some embodiments, the sidewall 160 may not be arranged at a rear portion of the cushioning element 100. Specifically, the sidewall 160 may be arranged in regions of the cushioning element adapted to be located in a vicinity of a boundary of the sole plate. For example, the sidewall 160 may be arranged in regions of the cushioning element 100 adapted to contact a boundary of the sole plate. In some embodiments, the sidewall 160 may essentially encompass the complete boundary 105 of the cushioning element 100.

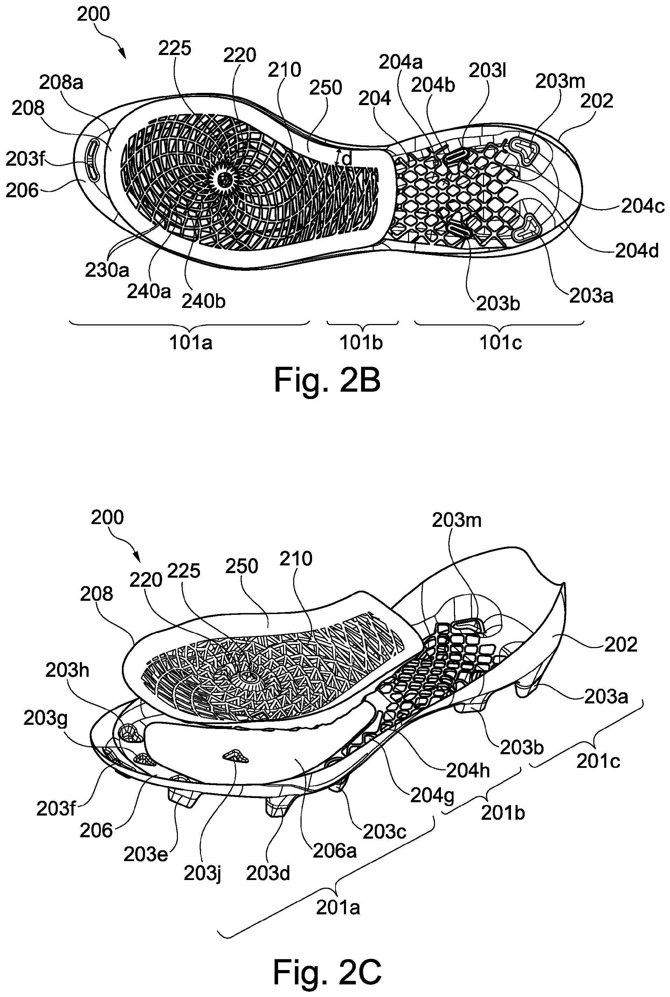

Figures 2A to 2D show a schematic exemplary embodiment of a system 200 comprising a sole plate 202 and a cushioning element 208. The cushioning element 208 comprises a grid structure 210. The grid structure 210 of the cushioning element 200 is arranged in a spiral pattern. In addition, the cushioning element 200 comprises an origin 220. In particular, the origin 220 comprises an aperture 225. The aperture 225 comprises a circle geometry. A part of the grid structure 210 emanates in the spiral pattern from the origin 220, particularly the aperture 225. The origin 220, particularly the aperture 225, is arranged in a region 201a of the cushioning element 200 adapted to receive a forefoot. Specifically, the origin 220 is located in a centre portion of the forefoot region 201a.

The grid structure 210 of the cushioning element 200 comprises a plurality of grid elements 230a, 230b, 240a, 240b (not all labelled). The grid elements 230a, 230b, 240a, 240b of the grid structure 210 are arranged such as to form the spiral pattern of the grid structure 210. Specifically, a part of the plurality of grid elements 230a, 230b, 240a, 240b emanates from the origin 220, particularly the aperture 225. For example, the grid elements 230a, 230b, 240a, 240b emanate from the origin 220 of the grid structure 210. A part of the grid elements of the grid structure 210 does not emanate from the origin 220. For example, grid elements located in a midfoot region 201b of the cushioning element do not emanate from the origin 220. The plurality of grid elements 230a, 230b, 240a, 240b comprises a first group 230a, 230b of grid elements and a second group 240a, 240b of grid elements. The grid elements 230a, 230b of the first group are arranged such as to follow the spiral pattern in a clockwise orientation. For example, the grid elements 230a, 230b emanate from the origin 220 such as to follow the spiral patter in a clockwise orientation. Similarly, the grid elements 240a, 240b of the second group are arranged such as to follow the spiral pattern in a counterclockwise orientation. For example, the grid elements 240a, 240b emanate from the origin 220 such as to follow the spiral patter in a counterclockwise orientation.

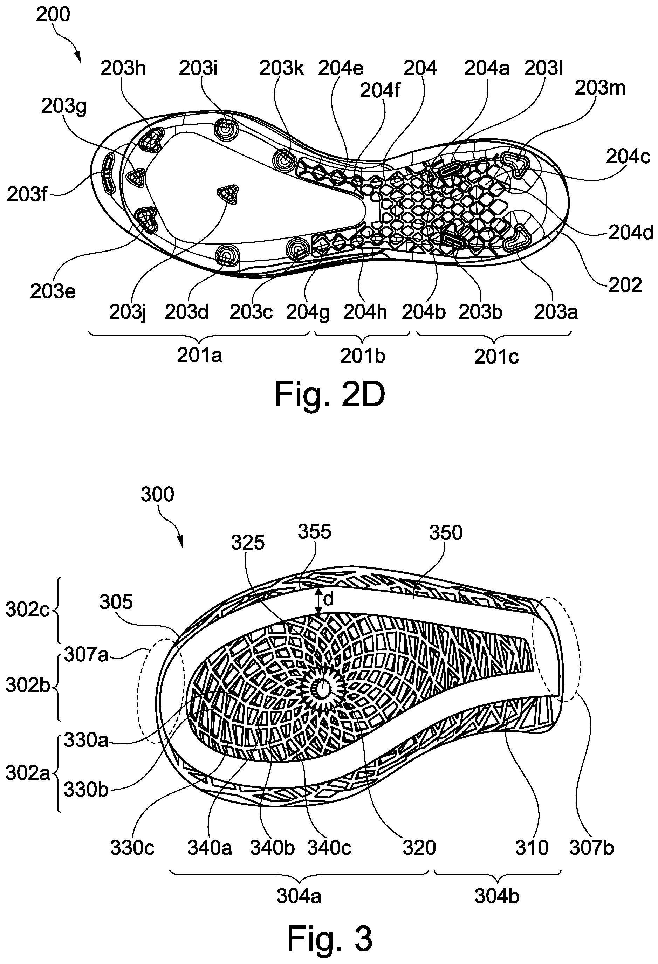

In addition, as best seen in Fig. 2B and Fig. 2D, the sole plate 202 comprises a second grid structure 204. The second grid structure 204 is arranged in a region of the sole plate 204 adapted to receive a rear and/or heel portion 201c of a foot. In addition, the second grid structure 204 is arranged in a region of the sole plate 202 adapted to receive a midfoot 201. In particular, the second grid structure extends from the region of the sole plate 204 adapted to receive a rear and/or heel portion 201c of a foot towards the region of the sole plate 204 adapted to receive a midfoot 201b. Specifically, the second grid structure 204 splits into two sub-parts in the midfoot region 201b. In other words, the part of the second grid structure 204 arranged in the rearfoot and/or heel regio 201c is formed as a connected grid structure and a part of the second grid structure 204 arranged in the midfoot region 201b is divided into two sub-parts. A first sub-part of the second grid structure 204 is arranged at a (outer) medial region of the sole element 202 and a second sub-part of the second grid structure 204 is arranged at a (outer) lateral region of the sole element 202. For example, a length of the first and/or second sub-part of the second grid structure 204 may be at least 1 cm, preferably at least 1.5 cm, more preferably at least 2 cm, even more preferably at least 2.5 cm, most preferably at least 3 cm. In addition, a width of the first and/or second sub-part of the second grid structure 204 may be at least 0.25 cm, preferably at least 0.5 cm, more preferably at least 0.75 cm, even more preferably at least 1 cm, most preferably at least 1.25 cm. A distance between the first sub-part of the second grid structure 204 and the second sub-part of the second grid structure 204 increases towards a forefoot portion 201a of the sole element 204. Specifically, the distance between the first sub-part and the second sub-part may increase continuously along a direction pointing from the midfoot portion 201b towards the forefoot portion 201a. For example, a distance between the first sub-part and the second sub-part may be at least 0.25 cm, preferably at least 0.5 cm, more preferably at least 0.75 cm, most preferably at least 1 cm.

The second grid structure 204 comprises a linear and/or straight pattern. Specifically, the second grid structure 204 comprises a plurality of grid elements arranged such as to essentially follow the linear and/or straight pattern. In other words, the grid elements of the plurality of grid elements may be essentially straight lines. For example, the grid elements of the second grid structure 204 are arranged such as to form holes and/or notches 204a, 204b, 204c, 204d, 204e, 204f, 204g, 204h (not all labelled). The holes and/or notches 204a, 204b, 204c, 204d, 204e, 204f, 204g, 204h comprise a rectangular and/or rhombus shape. The size of the holes and/or notches 204a, 204b, 204c, 204d, 204e, 204f, 204g, 204h varies across the second grid structure 204. For example, holes and/or notches 204c, 204d arranged in a rearfoot and/or heel region 201c may be larger than holes and/or notches arranged in a midfoot region 201b. The first sub-part of the grid structure 204, e.g., the (outer) medial sub-part, comprises the holes and/or notches 204e, 204f. In addition, the second sub-part of the grid structure 204, e.g., the (outer) lateral sub-part, comprises the holes and/or notches 204g, 204h.

As best seen in Fig. 2D, the sole plate 202 comprises a plurality 203a to 203m studs. The studs extend and/or protrude from an outer surface of the sole plate 202. The studs 203a, 203b, 203l, 203m are arranged in a rearfoot and/or heel portion 201c of the sole plate 202, e.g., a portion of the sole plate adapted to receive a rearfoot and/or a heel. Specifically, the studs 203a, 230b are arranged at a lateral side of the sole plate 202 and the studs 2031, 203m are arranged at a medial side of the sole plate 202. In addition, the sole plate 202 comprises studs 203c, 203k which are arranged at a transition region between a midfoot portion 201b of the sole plate 202 and a forefoot portion 201a of the sole plate 202. The stud 203c is arranged at a lateral side and the stud 203k is arranged at a medial side of the sole plate 202. In addition, the sole plate 202 comprises the studs 203d, 203e, 203f, 203g, 203h, 203i, 203j which are arranged in the forefoot region 201a of the sole plate 202. Specifically, the studs 203d and 203e are arranged at a lateral side of the sole plate 202 and the studs 203h and 203i are arranged at a medial side of the sole plate 202. In addition, the studs 203f, 203g and 203j are arranged at a centre portion of the sole plate, e.g., a region of the sole plate 202 where the medial portion transitions into the lateral portion.

Figure 3 shows a schematic exemplary embodiment of a cushioning element 300. The cushioning element 300 is adapted to be arranged at a sole plate of a shoe. The cushioning element 300 comprises a grid structure 310. The grid structure 310 is arranged in a spiral pattern. Specifically, the grid structure 310 of the cushioning element 300 emanates in the spiral pattern from an origin 320. The origin 320 of the grid structure 310 comprises an aperture 325. The aperture 325 of the origin 320 comprises a circle geometry. The origin 320, particularly the aperture 325 of the origin is located in a centre portion 320b of a region (201a) adapted to receive a forefoot.

The grid structure 310 of the cushioning element 300 comprises a plurality of grid elements 330a, 330b, 330c, 340a, 340b, 340c (not all labelled). The grid elements 330a, 330b, 330c, 340a, 340b, 340c are arranged such as to form the spiral pattern of the grid structure 310. In particular, at least a subset of the plurality of grid elements 330a, 330b, 330c, 340a, 340b, 340c emanates from the origin 320 of the grid structure 310. For example, the at least subset of the plurality of grid elements 330a, 330b, 330c, 340a, 340b, 340c emanates from the aperture 325 of the origin 320. Specifically, the at least subset of grid elements 330a, 330b, 330c, 340a, 340b, 340c emanate such from the origin 320 and/or the aperture 325 as to follow a spiral. The plurality of grid elements 330a, 330b, 330c, 340a, 340b, 340c comprises a first set of grid elements 330a, 330b, 330c and a second set of grid elements 340a, 340b, 340c. The grid elements 330a, 330b, 330c of the first group are arranged such as to emanate and/or propagate in a clockwise orientation. The grid elements 340a, 340b, 340c of the second group are arranged such as to emanate and/or propagate in a counterclockwise orientation. The grid elements of the first subset 330a, 330b, 330c intersect the grid elements of the second subset 340a, 340b, 340c. For example, the grid element 330a of the first group intersects the grid element 340a, 340b, 340c. In particular, the grid element 330a intersects the grid element 340a essentially in a right angle, e.g., perpendicular.

The cushioning element 300 further comprises a continuous portion 350. At least a part of the continuous portion 350 is located at a boundary 305 of the cushioning element 300. Specifically, the continuous portion 350 is located at the boundary 305 of the cushioning element 300 in a front portion 307a and in a rear portion 307b. For example, the a (outer) boundary 355 of the continuous portion 350 is located in a vicinity of the boundary 305 of the cushioning element 300 in the front portion 307a and in the rear portion 307b. Specifically, in the front region 307a, the boundary 355 of the continuous portion 350 contacts and/or transitions into the boundary 305 of the cushioning element 300. In addition, the continuous portion 350, particularly the (outer) boundary 355 of the continuous portion 350, is arranged such that the (outer) boundary 355 of the continuous portion 350 and the boundary 305 of the cushioning element 300 are separated, e.g., separated by a distance. Specifically, the (outer) boundary 355 of the continuous portion 350 and the boundary 305 of the cushioning element are distant at a lateral 302c and medial 302a region of the cushioning element 300. The (outer) boundary 355 of the continuous portion 350 and the boundary 305 of the cushioning element 300 are distant such that a portion of the grid structure 310 extends between the (outer) boundary 355 of the continuous portion 350 and the boundary 305 of the cushioning element 300.

### Further embodiments:

### Embodiment 1:

A cushioning element (100) adapted to be arranged at a sole plate of a shoe, preferably a football shoe, comprising a grid structure (110), wherein the grid structure (110) is arranged in a spiral pattern.

### Embodiment 2:

The cushioning element (100) according to Embodiment 1, wherein at least a part of the grid structure (110) emanates in the spiral pattern from an origin (120) of the grid structure (110).

### Embodiment 3:

The cushioning element (100) according to Embodiment 2, wherein the origin (120) comprises an aperture (125);
preferably wherein the aperture (125) comprises a circle and/or elliptic geometry.

### Embodiment 4:

The cushioning element (100) according to Embodiment 3, wherein a diameter of the aperture (125) is:
at least 0.5 cm, preferably at least 1 cm, more preferably 1.5 cm, most preferably at least 2 cm; and/or
at most 5 cm, preferably at most 4cm, more preferably at most 3 cm, most preferably at most 2 cm.

### Embodiment 5:

The cushioning element (100) according to Embodiment 3 or 4, wherein the origin (120) of the grid structure (110) is arranged in a region of the cushioning element:
adapted to receive a medial portion (102a) of a foot, preferably a medial portion (102a) of a forefoot (104a) and/or a medial portion (102a) of a midfoot (104b); and/or
adapted to receive a central portion (102b) of a foot, preferably a central forefoot portion and/or a central midfoot portion.

### Embodiment 6:

The cushioning element (100) according to one of the Embodiments 1 to 5, wherein the grid structure (110) comprises a plurality of grid elements (130a, 130b, 140a, 140b), wherein the plurality of grid elements (130a, 130b, 140a, 140b) is arranged such as to at least partially form the spiral pattern of the grid structure (130a, 130b, 140a, 140b).

### Embodiment 7:

The cushioning element (100) according to Embodiment 6, when depending on one of the Embodiments 2 to 5, wherein at least one of the grid elements (130a, 130b, 140a, 140b) of the plurality of grid elements (130a, 130b, 140a, 140b) emanates from the origin (120) of the grid structure.

### Embodiment 8:

The cushioning element (100) according to Embodiment 6 or 7, wherein a first grid element (130a, 130b) of the plurality of grid elements (130a, 130b, 140a, 140b) intersects at least one second grid element (140a, 140b) of the plurality of grid elements (130a, 130b, 140a, 140b).

### Embodiment 9:

The cushioning element (100) according to Embodiment 8, wherein the first grid element (130a, 130b) intersects the at least one second grid element (140a, 140b) essentially perpendicular.

### Embodiment 10:

The cushioning element (100) according to one of the Embodiments 6 to 9, wherein a thickness of the plurality of grid elements (130a, 130b, 140a, 140b) is:
at least 0.1 mm, preferably at least 0.5 mm, more preferably at least 0.9 mm, even more preferably at least 1.3 mm, most preferably at least 1.7 mm;
at most 2 cm, preferably at most 1.5 cm, more preferably at most 1 cm, even more preferably at most 0.5 cm, most preferably at most 2.5 mm.

### Embodiment 11:

The cushioning element (100) according to one of the Embodiments 1 to 10, further comprising a continuous portion (150), wherein at least a part of the continuous portion (150) is located at a boundary (105) of the cushioning element (100).

### Embodiment 12:

The cushioning element according to Embodiment 11, wherein the at least part of the continuous portion (150) essentially follows the boundary (105) of the cushioning element (100);
preferably wherein the continuous portion (150) essentially follows the boundary (105) of the cushioning element (100) such as to essentially encompass the complete boundary (105) of the cushioning element (100).

### Embodiment 13:

The cushioning element (100) according to Embodiment 11 or 12, wherein a diameter (d) of the continuous portion (105) is:
at least 0.1 cm, preferably at least 0.5 cm, more preferably at least 0.9 cm, even more preferably at least 1.4 cm, most preferably at least 2 cm;
at most 6 cm, preferably at most 5 cm, more preferably at most 4 cm, even more preferably at most 3 cm, most preferably at most 2 cm.

### Embodiment 14:

The cushioning element (100) according to one the Embodiments 1 to 13, wherein a shape and/or size of the cushioning element (100) is based on a shape and/or size of a portion of the sole plate.

### Embodiment 15:

Cushioning element (100) according to one of the Embodiments 1 to 14, wherein at least a part of the cushioning element (100) is 3D printed, preferably wherein the at least part of the cushioning element (100) that is 3D printed comprises the grid structure (100) and/or the continuous portion (105).

### Embodiment 16:

The cushioning element (100) according to Embodiment 15, wherein the at least a part of the cushioning element (100) that is 3D printed is 3D printed by stereolithography, preferably based on a photochemical process.

### Embodiment 17:

The cushioning element (100) according to one of the Embodiments 1 to 16, wherein the cushioning element, preferably the grid structure, comprises polyurethane.

### Embodiment 18:

The cushioning element (100) according to one of the Embodiments 1 to 17, wherein the grid structure (110) covers:
at least 10%, preferably at least 30%, more preferably at least 50%,
even more preferably at least 70%, most preferably at least 90% of the cushioning element (100);
at most 99%, preferably at most 95%, more preferably at most 90%, even more preferably at most 85%, most preferably at most 80% of the cushioning element (100).

### Embodiment 19:

The cushioning element (100) according to one of the Embodiments 1 to 18, further comprising at least one sidewall (160), wherein the at least one sidewall (160) is arranged at a boundary (105) of the cushioning element (100); preferably wherein the at least one sidewall of the cushioning element (100) extends from the continuous portion (150) of the cushioning element (100).

### Embodiment 20:

A sole plate (202) adapted to be arranged at a shoe, preferably a football shoe, the sole plate (202) comprising:
a first cavity (206) adapted to receive a first cushioning element (208) according to one of the Embodiments 1 to 19.

### Embodiment 21:

The sole plate (202) according to Embodiment 20, wherein the first cavity (206) is arranged in a region of the sole plate adapted to receive a forefoot (201a) and/or a midfoot (201b);
preferably wherein the first cavity (206) extends from the region adapted to receive the forefoot (201a) to the region adapted to receive the midfoot (201b).

### Embodiment 22:

The sole plate (202) according to Embodiment 21, wherein a diameter of the first cavity (206) is based on a diameter of the sole plate (202); preferably wherein the diameter of the first cavity (206) essentially corresponds to the diameter of the sole plate (202).

### Embodiment 23:

The sole plate (202) according to one of the Embodiments 20 to 22, wherein the first cavity (206) is arranged on a side of the sole plate (202) adapted to face a foot.

### Embodiment 24:

The sole plate (202) according to one of the Embodiments 20 to 23, wherein at least a part of the sole plate (202) is manufactured by injection moulding; preferably wherein the complete sole plate (202) is manufactured by injection moulding.

### Embodiment 25:

The sole plate (202) according to one of the Embodiments 20 to 24, wherein the sole plate (202) comprises polyamide, preferably polyamide 11.

### Embodiment 26:

The sole plate (202) according to one of the Embodiments 20 to 25, wherein the sole plate (202) comprises a second grid structure (204); preferably wherein the second grid structure (204) comprises a spiral and/or rectangular pattern.

### Embodiment 27:

The sole plate (202) according to Embodiment 26, wherein the second grid structure (204) is arranged at a heel area (201c) of the sole plate (202).

### Embodiment 28:

The sole plate (202) according to Embodiment 26 or 27, wherein:
at least a portion of the second grid structure (204) is integrally formed with the sole plate (202); preferably by injection moulding; and/or
at least a portion of the second grid structure (204) is attached to the sole plate (202); preferably wherein the at least portion of the second grid structure (204) is attached to the sole plate (202) via gluing.

### Embodiment 29:

The sole plate (202) according to one of Embodiments 20 to 28 comprising a first cushioning element (208) according to one of the Embodiments 1 to 19.

### Embodiment 30:

A shoe, preferably a football shoe, comprising:
a sole plate (202) according to one of the Embodiments 20 to 28;
a cushioning element (208) according to one of the Embodiments 1 to 19;
   wherein the cushioning element (208) is arranged in a cavity (206) of the sole plate (202).

### Embodiment 31:

The shoe according to Embodiment 29, further comprising an inner sole, wherein at least a part of the inner sole is arranged on the cushioning element (208).

## Claims

1. A cushioning element (100) adapted to be arranged at a sole plate of a shoe, preferably a football shoe, comprising a grid structure (110), wherein the grid structure (110) is arranged in a spiral pattern.

2. The cushioning element (100) according to claim 1, wherein at least a part of the grid structure (110) emanates in the spiral pattern from an origin (120) of the grid structure (110).

3. The cushioning element (100) according to claim 2, wherein the origin (120) comprises an aperture (125);
preferably wherein the aperture (125) comprises a circle and/or elliptic geometry.

4. The cushioning element (100) according to claim 3, wherein:
a diameter of the aperture (125) is:
at least 0.5 cm, preferably at least 1 cm, more preferably 1.5 cm, most preferably at least 2 cm; and/or
at most 5 cm, preferably at most 4cm, more preferably at most 3 cm, most preferably at most 2 cm; and/or
the origin (120) of the grid structure (110) is arranged in a region of the cushioning element:
adapted to receive a medial portion (102a) of a foot, preferably a medial portion (102a) of a forefoot (104a) and/or a medial portion (102a) of a midfoot (104b); and/or
adapted to receive a central portion (102b) of a foot, preferably a central forefoot portion and/or a central midfoot portion.

5. The cushioning element (100) according to one of the claims 1 to 4, wherein the grid structure (110) comprises a plurality of grid elements (130a, 130b, 140a, 140b), wherein the plurality of grid elements (130a, 130b, 140a, 140b) is arranged such as to at least partially form the spiral pattern of the grid structure (130a, 130b, 140a, 140b); preferably when depending on one of the claims 2 to 4, wherein at least one of the grid elements (130a, 130b, 140a, 140b) of the plurality of grid elements (130a, 130b, 140a, 140b) emanates from the origin (120) of the grid structure.

6. The cushioning element (100) according to claim 5, wherein a first grid element (130a, 130b) of the plurality of grid elements (130a, 130b, 140a, 140b) intersects at least one second grid element (140a, 140b) of the plurality of grid elements (130a, 130b, 140a, 140b); preferably wherein the first grid element (130a, 130b) intersects the at least one second grid element (140a, 140b) essentially perpendicular.

7. The cushioning element (100) according to claim 5 or 6, wherein a thickness of the plurality of grid elements (130a, 130b, 140a, 140b) is:
at least 0.1 mm, preferably at least 0.5 mm, more preferably at least 0.9 mm, even more preferably at least 1.3 mm, most preferably at least 1.7 mm;
at most 2 cm, preferably at most 1.5 cm, more preferably at most 1 cm, even more preferably at most 0.5 cm, most preferably at most 2.5 mm.

8. The cushioning element (100) according to one of the claims 1 to 7, further comprising:
a continuous portion (150), wherein at least a part of the continuous portion (150) is located at a boundary (105) of the cushioning element (100); and/or
at least one sidewall (160), wherein the at least one sidewall (160) is arranged at a boundary (105) of the cushioning element (100); preferably wherein the at least one sidewall of the cushioning element (100) extends from the continuous portion (150) of the cushioning element (100).

9. The cushioning element according to claim 8, wherein:
the at least part of the continuous portion (150) essentially follows the boundary (105) of the cushioning element (100), preferably wherein the continuous portion (150) essentially follows the boundary (105) of the cushioning element (100) such as to essentially encompass the complete boundary (105) of the cushioning element (100); and/or a diameter (d) of the continuous portion (105) is:
at least 0.1 cm, preferably at least 0.5 cm, more preferably at least 0.9 cm, even more preferably at least 1.4 cm, most preferably at least 2 cm; and/or
at most 6 cm, preferably at most 5 cm, more preferably at most 4 cm, even more preferably at most 3 cm, most preferably at most 2 cm.

10. The cushioning element (100) according to one the claims 1 to 9, wherein:
a shape and/or size of the cushioning element (100) is based on a shape and/or size of a portion of the sole plate; and/or
at least a part of the cushioning element (100) is 3D printed, preferably wherein the at least part of the cushioning element (100) that is 3D printed comprises the grid structure (100) and/or the continuous portion (105); and/or
the cushioning element, preferably the grid structure, comprises polyurethane; and/or
the grid structure (110) covers:
at least 10%, preferably at least 30%, more preferably at least 50%, even more preferably at least 70%, most preferably at least 90% of the cushioning element (100); and/or
at most 99%, preferably at most 95%, more preferably at most 90%, even more preferably at most 85%, most preferably at most 80% of the cushioning element (100).

11. A sole plate (202) adapted to be arranged at a shoe, preferably a football shoe, the sole plate (202) comprising:
a first cavity (206) adapted to receive a first cushioning element (208) according to one of the claims 1 to 10.

12. The sole plate (202) according to claim 11, wherein:
the first cavity (206) is arranged in a region of the sole plate adapted to receive a forefoot (201a) and/or a midfoot (201b); preferably wherein the first cavity (206) extends from the region adapted to receive the forefoot (201a) to the region adapted to receive the midfoot (201b); and/or
the first cavity (206) is arranged on a side of the sole plate (202) adapted to face a foot; and/or
at least a part of the sole plate (202) is manufactured by injection moulding; preferably wherein the complete sole plate (202) is manufactured by injection moulding; and/or
the sole plate (202) comprises polyamide, preferably polyamide 11.

13. The sole plate (202) according to claim 11 or 12, wherein the sole plate (202) comprises a second grid structure (204); preferably wherein the second grid structure (204) comprises a spiral and/or rectangular pattern.

14. The sole plate (202) according to claim 13, wherein:
the second grid structure (204) is arranged at a heel area (201c) of the sole plate (202); and/or
at least a portion of the second grid structure (204) is integrally formed with the sole plate (202); preferably by injection moulding; and/or at least a portion of the second grid structure (204) is attached to the sole plate (202); preferably wherein the at least portion of the second grid structure (204) is attached to the sole plate (202) via gluing.

15. A shoe, preferably a football shoe, comprising:
a sole plate (202) according to one of the claims 11 to 14;
a cushioning element (208) according to one of the claims 1 to 10;
wherein the cushioning element (208) is arranged in a cavity (206) of the sole plate (202).
